# EUROPEAN PATENT SPECIFICATION

(11) **EP 1 348 209 B1**
(45) Date of publication and mention of the grant of the patent: **04.07.2007**
(21) Application number: 01908583.6
(22) Date of filing: 02.01.2001
(51) Int. Cl.: G09B 23/18

(54) **BREADBOARD USED FOR EDUCATIONAL PURPOSES**
BREADBOARD FÜR AUSBILDUNGSZWECKE
MAQUETTE UTILISEE A DES FINS EDUCATIVES

(43) Date of publication of application: 01.10.2003
(73) Proprietor: Addest Technovation Pte. Ltd., Singapore 069533 (SG)
(72) Inventor: GOH, Zenton, Singapore 680642 (SG); LIM, Soh Min, Singapore 750309 (SG); NEO, Sian Sheng, S ingapore 689527 (SG); TAN, Kah Chye, Singapore 4 39961 (SG)
(74) Representative: Viering, Jentschura & Partner
(86) International application number: PCT/SG2001/000021
(87) International publication number: WO 2002/054371

(56) References cited:
- EP-A- 0 051 304
- EP-A- 0 526 090
- DE-A- 1 175 922
- DE-A- 2 147 068
- FR-A- 2 032 244
- GB-A- 344 668

## Description

The invention relates to a breadboard and to a kit including the breadboard for building and displaying electronic circuits used for educational purposes.

A breadboard used for building electronic circuits is a device which is usually used for designing, developing and testing electronic circuits. The advantage of a breadboard compared to other techniques for building an electronic circuit is that a circuit can easily be assembled, rebuilt and disassembled. Therefore, developers of electronic circuits frequently use breadboards when they want to assemble test circuits in order to design and improve electronic circuits.

However, a breadboard can also be used for educational purposes. In this respect breadboards are often used in practical training courses for educating the art of electronics, where the students or pupils learn a singlehanded dealing with electronic components. Another application for employing a breadboard for educational purposes is to use a breadboard in lectures or classes, where students or pupils follow the professor or teacher assembling an electronic circuit.

In DE 1 175 922 B, a breadboard according to the preamble part of claim 1 and a kit according to the preamble part of claim 14 are disclosed. Each of the contact stations includes a couple of four contact points which are electrically connected to each other thereby allowing electrical connection of four electronic component blocks by each contact station without external connection wires. The contact stations are periodically distributed over the assembly panel of the breadboard such that they form a rectangular grid with the four contact points of each contact stations arranged to form a square so that the distances between two contact points of a contact station and two contact points of an adjacent different contact station are equal and can be bridged by electronic component blocks.

Another concept of a breadboard is disclosed in DE 2 147 068 A, according to which a plurality of groups of three contact points of different electrical potentials are distributed over the assembly panel in a plurality of rows wherein the groups of contact points of one row are displaced with respect to the groups of each adjacent row. Those contact points of the groups which have the same electrical potential are electrically connected to each other. Each of the electronic component blocks have three contact pins corresponding with said three contact points of each group so that the electronic component blocks can be arranged in respective rows and can be connected to each other by connecting wires in order that the current flows between the assembled component blocks are visually represented by the connecting wires.

The object of the present invention is to provide a breadboard and a kit for building and displaying electronic circuits used for educational purposes, which breadboard allows a convenient installation of active electronic components in an electronic circuit.

The invention is defined in claims 1 and 14, respectively. Preferred embodiments are defined in the subclaims.

In order to achieve the above described object the present invention provides a breadboard for building and displaying electronic circuits used for educational purposes, which breadboard comprises a panel housing, an assembly panel attached to and covering the panel housing, a plurality of contact stations located on and periodically distributed over the assembly panel such that they form a regular grid, which contact stations are electrically isolated from each other and capable of receiving electronic component blocks, a plurality of first power supply points located on and periodically distributed over the assembly panel such that they form a regular grid, which first power supply points are electrically connected to each other, and a plurality of second power supply points located on and periodically distributed over the assembly panel such that they form a regular grid, which second power supply points are electrically connected to each other and the second power supply points are electrically isolated from the first power supply points, wherein the grids formed by the contact stations, the first power supply points and the second power supply points have the same periodicity.

Each contact station comprises a couple of contact points which are electrically connected to each other and which are capable of receiving the electronic component blocks, wherein the number and the spatial arrangement of the contact points is the same for all contact stations and the plurality of contact stations, the plurality of first power supply points and the plurality of second power supply points form a rectangular grid.

The breadboard for building and displaying electronic circuits has the advantage that active electronic components can be conveniently installed within an electronic circuit assembled on the breadboard. In this respect active electronic components are components of an electronic circuit, which are able to produce an output signal with more power in it than the input signal. The additional power comes from an external power source. It is important to note that these active components are characterized by a power gain, i.e. a gain of the product of voltage and current. Electronic components like a step-up transformer are no active components since they produce only a voltage gain and are not able to amplify power.

It is pointed out that the number of different types of power supply points which are located on the breadboard is not limited to two. According to the present invention it is of course also possible to employ three or more different power supply groups to which different voltage levels may be applied.

Since the plurality of contact stations, the plurality of first power supply points and the plurality of second power supply points form a rectangular grid, the arrangement of the contact stations and of the first and the second power supply points on a rectangular grid allows a clear and synoptic assembly of electronic circuits on the breadboard.

The contact stations, the first power supply points and the second power supply points can be distributed over the assembly panel such that the electronic component blocks can only be inserted in the assembly panel in a predetermined way. Using such a predefined distribution of the contact stations and of the first and the second power supply points over the assembly panel has the benefit that active as well as passive electronic component blocks can only be inserted in a correct way whereby a damaging of electronic component blocks can be prevented.

Further, since each contact station comprises a couple of contact points which are electrically connected to each other and which are capable of receiving the electronic component blocks, wherein the number and the spatial arrangement of the contact points is the same for all contact stations, a convenient electrical connection between different electronic component blocks within an electronic circuit assembled on the breadboard is allowed, because no additional wires or jumpers are necessary to connect the different electronic component blocks.

According to an embodiment of the invention each contact station comprises five contact points, wherein one center contact point is located in the center of the contact station and four surrounding contact points are symmetrically and equidistantly located around the center contact point, wherein the contact points are located along one of the two directions defined by the grid. This symmetrical distribution of four contact points around one center contact point allows an electrical connection between four electronic component blocks, if one connection pin of each component block is inserted in one of the four contact points located around the center contact point. Further on the voltage level can easily be measured if a probe or a contact pin of a voltmeter or an ammeter is connected to the center contact point.

According to another preferred embodiment of the invention the center contact point has a different shape than the surrounding contact points. With a proper choice of the shape of the center contact point the electronic component blocks can only be inserted in the surrounding contact points so that the center contact point is unoccupied and, if requested, a probe or a contact pin of a voltmeter or an ammeter can always be connected to the center contact point.

According to a further preferred embodiment of the present invention the breadboard is arranged in such a way that it can be combined with a further breadboard of the same type forming an expanded breadboard such that the spatial periodicity of the contact stations, of the first power supply points and of the second power supply points are conserved on the extended top surface of the expanded breadboard. Therewith the breadboard is a modular breadboard and the breadboard can be used to form an expanded breadboard providing the opportunity to assemble larger electronic circuits.

According to a particular preferred embodiment the breadboard further comprises a linking connector which is located at a side face of the panel housing and which is electrically connected to the first power supply points and to the second power supply points. Such a linking connector allows a connection of two or more modular breadboards, wherein the first and the second power supply points of the breadboards are automatically connected to each other, respectively.

According to another embodiment of the present invention the linking connector is connectable to a power supply source. This provides the opportunity to conveniently connect a power supply source with the first and second power supply points.

Another preferred embodiment of the invention provides a linking connector which is capable of mechanically connecting the breadboard with the further breadboard and/or with the power supply source. Due to the usage of the linking connector also for mechanically connecting the breadboard with the further breadboard and/or with the power supply source there is no longer a need for additional mechanical connectors.

According to another preferred embodiment the linking connector is capable of electrically connecting the first and the second power supply points of the breadboard with the first and the second power supply points of the further breadboard, respectively. Therefore the linking connector enables the connection of two or more modular breadboards forming a extended breadboard, wherein the first and the second power supply points of the breadboards are automatically connected to each other, respectively.

According to another embodiment of the invention the breadboard comprises one linking connector or more linking connectors at each side face of the panel housing. This provides the possibility to attach further breadboards at each side of the breadboard.

According to a further embodiment of the present invention the linking connectors are located at predefined positions such that an improper connection of the breadboard with the further breadboard or with the power supply source is either impossible or visually obviously wrong.

According to another embodiment of the invention the assembly panel and/or the panel housing are made out of an electrically isolating material, in particular the assembly panel and/or the panel housing can be made out of synthetic resin. This has the advantage that no special effort is needed to electrically isolate the contact stations, the plurality of first power supply points and the plurality of second power supply points from each other.

According to another preferred embodiment of the invention the assembly panel is a printed circuit board. Using a printed circuit board is a very effective and economic way to build a breadboard according to the present invention.

The invention also discloses a kit for building and displaying electronic circuits used for educational purposes with a breadboard as described above and an electronic component block comprising a block housing, a component element which is received in the block housing and connection pins, which are received in the block housing and which are electrically connected to terminals of the component element. Therefore the invention also discloses the appropriate electronic component blocks which are necessary to exploit the benefits provided by the breadboard according to the invention.

According to an embodiment of the invention the electronic component block further comprises a legend located on the block housing for denoting the characteristics of the component element. The usage of such clearly visible legends on the block housings of the electronic component blocks makes it much easier to recognize which type of electronic components are used to assemble the current electronic circuit.

According to a preferred embodiment of the invention the block housing comprises holes to allow the insertion of connection pins of a further electronic component block such that the further electronic component block can mechanically be connected to the electronic component block, and the connection pins are formed such that, when the further electronic component block is mechanically connected to the electronic component block, the connection pins of the further electronic component block are also electrically connected to the connection pins. Using such specially designed electronic component blocks allows to increase the capacity of the breadboard according to the invention because several electronic component blocks can be attached together, thus forming a stack of electronic component blocks. Such a stack of electronic component blocks can be inserted in the same contact points where usually only one electronic component block is inserted, whereby not only the two-dimensional plane of the assembly panel is utilized but also the third dimension i.e. the space above the assembly panel. Using this third dimension the circuit diagram of the electronic circuit assembled on the breadboard is still easy to recognize even when the circuit comprises many electronic component elements within a narrow space.

It is pointed out that such a use of the third dimension (upwards) to improve the capacity of the breadboard does not compromise the visual correlation between the assembled circuit and the user's circuit diagram since the parallel/series connections are visually obvious.

Further it is emphasized that such a use of the third dimension (upwards) to improve the capacity of the breadboard is localized in the sense that only the electronic component blocks but not the whole or an additional breadboard are built into the third dimension.

According to another preferred embodiment of the invention the kit further comprises a serial connection unit which, when connected between the contact stations of the assembly panel and further electronic component blocks, provides a serial electrical circuit of the further electronic component blocks. Such a serial connection unit has also the advantage that, when a serial connection of component blocks is necessary, the capacity of the breadboard can effectively be increased.

According to another embodiment of the invention the electronic component block further comprises a first power supply connection pin which is received in the block housing and which is electrically connected to a terminal of the component element and a second power supply connection pin which is received in the block housing and which is electrically connected to another terminal of the component element, wherein, when the electronic component block is attached to the assembly panel, the first power supply connection pin is electrically connected to one of the first power supply points and the second power supply connection pin is electrically connected to one of the second power supply points. Using these appropriate active electronic component blocks in particular allows to fully exploit the benefits provided by the first and by the second power supply points, which are located on and which are distributed over the surface of the assembly panel.

According to a further preferred embodiment of the present invention the component element can comprise a conductive wire, a crocodile clip, a resistor, a light bulb, a capacitor, an inductor, a diode, a transistor, a digital logic gate, an integrated circuit, a housing for an integrated circuit and/or a circuit comprising several electrical and/or electronic components. Thus, the component elements according to the invention can comprise all kinds of electronic components such that all kinds of electronic circuits can easily be assembled.

Further, a non-claimed electronic component block for being inserted in a kit described above is disclosed. The electronic component block comprises a block housing, a component element which is received in the block housing, connection pins which are received in the block housing and which are electrically connected to terminals of the component element, a first power supply connection pin which is received in the block housing and which is electrically connected to a terminal of the component element and a second power supply connection pin which is received in the block housing and which is electrically connected to another terminal of the component element. The electronic component block comprises all features such that the benefit of the breadboard according to the present invention can be exploited.

The above and other objects, features and advantages of the present invention will become apparent from the following description and the appended claims, taken in conjunction with the accompanying drawing.
**Figure 1** shows a breadboard according to a preferred embodiment of the present invention.
**Figure 2a** shows a top perspective view of a passive electronic component block ,
**Figure 2b** shows a bottom perspective view of the passive electronic component block shown in Fig.2a.
**Figure 3a** shows a top perspective view of an active electronic component block
**Figure 3b** shows a bottom perspective view of the active electronic component block shown in Fig.3a.
**Figure 4a** shows a top perspective view of a passive electronic component block comprising a capacitor.
**Figure 4b** shows a top perspective view of a passive electronic component block comprising a wire.
**Figure 4c** shows a top perspective view of an active electronic component block comprising an operational amplifier.
**Figure 4d** shows a top perspective view of a passive electronic component block comprising a cross link.
**Figure 4e** shows a top perspective view of a passive electronic component block comprising two switches.
**Figure 4f** shows a top perspective view of a passive electronic component block comprising a socket for receiving an integrated circuit.
**Figure 5** shows a top perspective view of two component blocks which are to be connected together leading to a parallel connection of the two component blocks comprising two electronic elements.
**Figure 6** shows a top perspective view of three component blocks which are to be connected together leading to a parallel connection of the three component blocks comprising three electronic elements.
**Figure 7** shows a top perspective view of a serial connection of three component blocks employing a serial connection unit.
**Figure 8** shows a top perspective view of a serial connection of five component blocks employing two serial connection units.

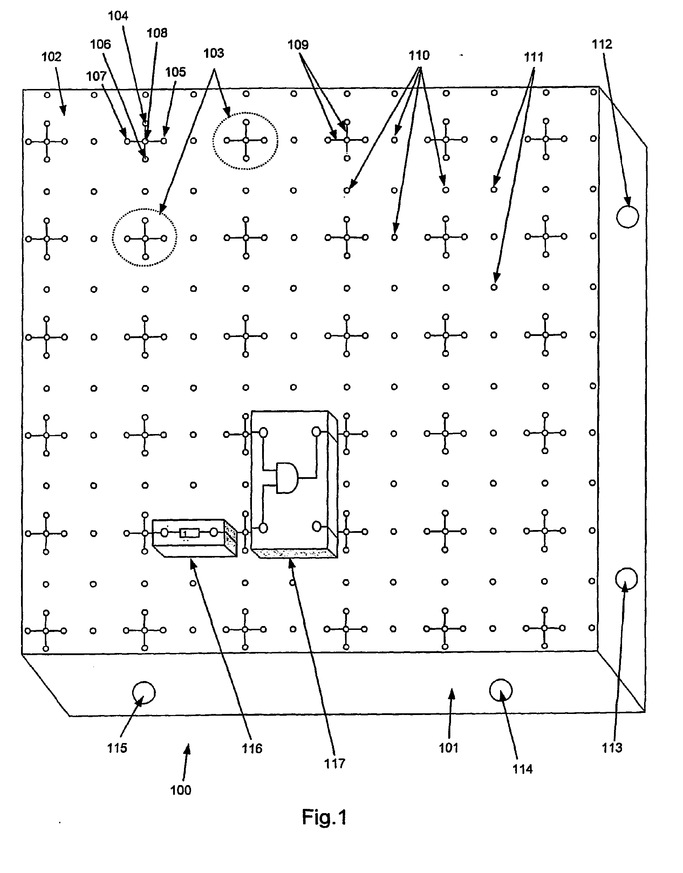

In the following a preferred embodiment of the present invention is described with reference to Fig.1. The breadboard 100 according to the present invention comprises a panel housing 101, which has the outer shape of a rectangular parallelepiped. The panel housing 101 is made out of an isolating material e.g. synthetic resin. According to the preferred embodiment of the invention the panel housing 101 is a plastic mold, wherein the top of the mold is empty and used for housing the assembly panel 102. Using an isolating material for the panel housing 101 reduces the risk of creating a shortcut when a circuit is assembled on the breadboard 100. On the panel housing 101 there is attached an assembly panel 102. The panel housing 101 is used to support the assembly panel 102. According to this preferred embodiment the assembly panel 102 is a printed circuit board which is commonly available in most shops selling electronics. Therefore using a usual printed circuit board as the assembly panel 102 according to the invention is a very economical way to produce the breadboard 100.

On the surface of the assembly panel 102 there are located a plurality of contact stations 103, which are periodically distributed over the assembly panel 102. The contact stations 103 are arranged as an equally spaced coordinated array such that their locations form a rectangular grid. Each contact station 103 is electrically isolated from any other contact station 103.

Each of the contact stations 103 comprises a plurality of five contact points 104, 105, 106, 107, 108, which are electrically connected to each other. The conductible connection between the five contact points 104, 105, 106, 107, 108 is visually indicated with the lines 109, which are printed on the assembly panel 102. According to the described embodiment of the invention, each contact station 103 includes one center contact point 108 located in the center of the contact station 103 and four surrounding contact points 104, 105, 106, 107 symmetrically and equidistantly located around the center contact point 108, wherein the contact points 105,108,107 are located along one direction defined by the rectangular grid and the contact points 104, 108, 106 are located along the other direction defined by the rectangular grid, wherein the two directions defined by the rectangular grid are perpendicular to each other.

The contact points 104, 105, 106, 107, 108 are plated-through holes in the printed circuit board. The surrounding contact points 104, 105, 106, 107 are used for connecting terminals of electronic component blocks, which are used to set up an electronic circuit on the breadboard 100. The properties and features of such electronic component blocks will be described later. The center contact point 108 can be used to connect a terminal of a voltage or current sensor or probe i.e. a voltmeter or ammeter. It is preferred that the shape of the hole of the center contact point 108 differs from the form of the holes of the surrounding contact points 104, 105, 106, 107. Thereby it is ensured that only a terminal of a voltage or current sensor or probe can be inserted into the hole of the center contact point 108.

The assembly panel 102 further comprises a plurality of first power supply points 110 located on and periodically distributed over the assembly panel 102 such that they form a rectangular grid, wherein the first power supply points 110 are electrically connected to each other. Moreover, the assembly panel 102 comprises a plurality of second power supply points 111 which are also located on and periodically distributed over the assembly panel 102 such that they form a rectangular grid, wherein the second power supply points 111 are electrically connected to each other. In order not to confuse the user, the power supply points are not visually connected to each other. The group of first power supply points 110 is isolated from the group of second power supply points 111, the group of first power supply points 110 is isolated from the contact stations 103 and the group of second power supply points 111 is also isolated from the contact stations 103.

According to the present invention the power supply points 110, 111 are used to transport electrical power to active electronic component blocks provided by power supply source which is connected to the power supply points 110, 111. Details on the active and passive electronic component blocks will be described later.

As can be seen from Fig. 1 the periodicity of the three grids defined by the contact stations 103, the first power supply points 110 and the second power supply points 111 is the same. The same periodicity for these three grids provides the basis for the following two advantageous features of the breadboard 100:
1. The three grids are spatially shifted with respect to each other causing the distances between the contact points 104, 105, 106, 107, 108 and the first and second power supply points 110, 111 to be such that, if appropriate electronic component blocks are used, it is not possible to insert the electronic component blocks in a wrong way.
2. The length and the width of the breadboard 100 are both an integral multiple of the period of the three grids defined by the contact stations 103, the first power supply points 110 and the second power supply points 111. Therefore it is possible to arrange the contact stations 103, the first power supply points 110 and the second power supply points 111 with respect to the assembly panel 102 such that, when two or more breadboards 100 are placed next to each other, the periodicity of the contact stations 103, the first power supply points 110 and the second power supply points 111 is conserved. A breadboard 100 with such geometric features is a modular breadboard 100, because it can be combined with further modular breadboards 100 such that it is possible to insert electronic component blocks across two breadboards 100.

According to the present invention the breadboard 100 further comprises linking connectors which are developed at the side faces of the panel housing 101. As one can see from Fig.1 each side face of the panel housing 101 comprises two linking connectors. Due to the perspective view of Fig.1 only four linking connectors 112, 113, 114, 115 out of totally eight provided linking connectors can be seen. According to the preferred embodiment described herein the linking connectors 112, 113, 114, 115 comply two different tasks:
1. The linking connectors 112, 114 and 113, 115 provide electrical connections with the first and the second power supply points 110, 111, respectively.
2. The linking connectors 112, 113, 114, 115 provide a mechanical connection with a further breadboard, which is placed next to the breadboard 100. Thereby an expanded breadboard consisting of several modular breadboards 100 is assembled.

The linking connectors 112, 114 and 113, 115 provide an elegant possibility to supply electrical power to the first and the second power supply points 110, 111, respectively. According to the present invention this is achieved with a power supply source (not shown), which is connected to the breadboard 100 such that one output of the power supply source is connected with the first linking connector (e.g. 112) and the other output of the power supply source is connected with the second linking connector (e.g. 113), wherein both linking connectors (e.g. 112, 113) are located at the same side face of the panel housing 101 facing the two outputs of the power supply source. The usage of the linking connectors according to the invention makes sure, that when the breadboard 100 is powered up (i.e. the first and the second power supply points 110, 111 are connected to the power supply source), the first and the second power supply points located on a further breadboard will automatically also be powered up at the same time when the second breadboard 100 is mechanically connected to the first breadboard 100.

It is pointed out that it is not requisite that the first power supply points are connected to a first linking connector and the second power supply points are connected to a second linking connector. Since there are a diversity of linking connectors available comprising at least two connection surfaces the electrical connection between the first power supply points located on different breadboards as well as the electrical connection between the second power supply points located on different breadboards can also easily be achieved with a single linking connector comprising at least two connection surfaces. It is clear that the electrical connection between the two outputs of a power supply source and the breadboard 100 can also be achieved with a single linking connector.

For most cases, in particular when TTL (transistor-transistor-logic) electronic components are employed to build up an electronic circuit, it is advantageous to use a power supply source which provides the two voltage levels 0 volt and +5 volt.

At this point it is emphasized that it is of course possible to employ three or more different types of power supply groups, which are located on the assembly panel 102. According to a preferred embodiment of the invention there are located three different types of power supply points to which the voltage levels of -3 volt, 0 volt and +3 volt or 0 volt, +3 volt and +5 volt are applied. In case of employing five different types of power supply points the preferred voltage levels -5 volt, -3 volt, 0 volt, +3 volt and +5 volt may be applied.

According to another embodiment of the invention the linking connectors located at the side faces of the panel housing 101 are all of the same type such that an electrical connection between the two linking connectors of two breadboards arranged side-by-side is only achieved when a support connector is inserted between the linking connectors of the two breadboards. The usage of such a linking connector has the advantage that, if the first breadboard is already powered up by an external power supply, by inserting one end of the support connector to the linking connector of the first breadboard and the other end of the support connector to the linking connector of the adjacent second breadboard, the adjacent second breadboard will be automatically powered up at the same time the adjacent second breadboard is mechanically connected to the first breadboard.

According to a further preferred embodiment of the invention the linking connectors 112, 113, 114, 115 are RCA-sockets and the support connector is a RCA pin-to-pin connector. The RCA sockets have each two connection surfaces, wherein one of the connection surfaces is used to connect the +5 volt power supply points and the other connection surface is used to connect the 0 volt power supply points with the corresponding output of the power supply source.

According to the embodiment shown in Fig.1 the distances and the locations of the two linking connectors 112, 114 and 113, 115 mounted in holes located in each side face of the panel housing 101 are chosen such that an improper connection of two breadboards is either impossible or obviously wrong for the user.

In the following we will focus on the electronic components which can be used together with the breadboard 100. Fig. 1 shows how a passive electronic component block 116 and an active electronic component block 117 are properly inserted into the breadboard 100.

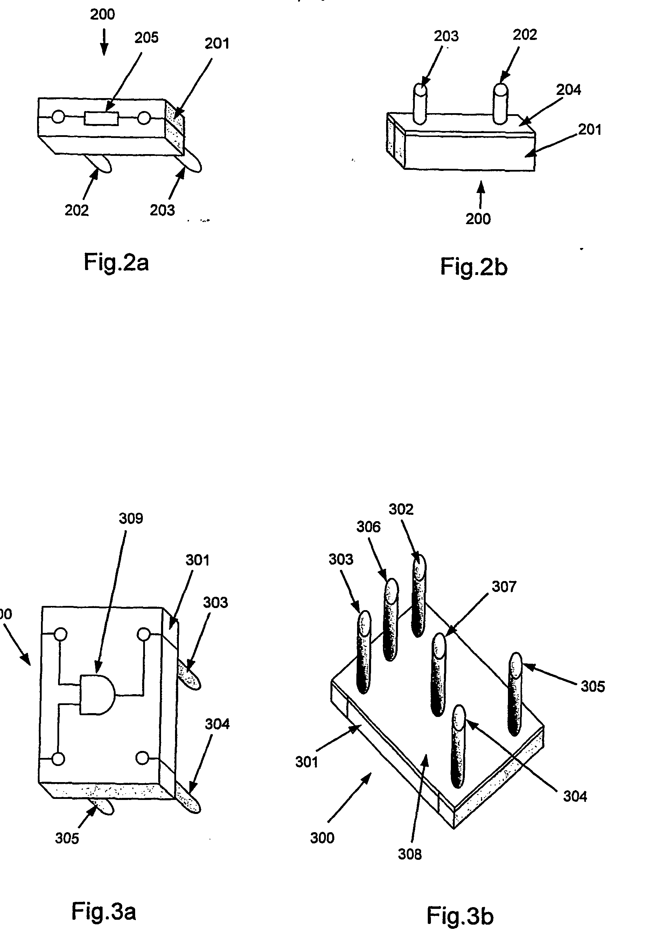

Fig.2a and Fig.2b show a top and a bottom perspective view of a resistor component block as an example of a passive electronic component block 200. The passive electronic component block 200 comprises a block housing 201, an electronic passive component element (not shown), which is received in the block housing 201 and connection pins 202, 203, which are received in the block housing 201 and which are electrically connected to the terminals of the passive component element.

The passive electronic component block 200 further comprises a mounting strip 204 whereon the electronic component element and the block housing 201 are mounted. The connection pins 202, 203 are also mounted to the mounting strip 204. On the block housing 201 there is printed a legend 205 indicating the type and the value of the electronic element included in the passive electronic component block 200.

The distance between the two connection pins 202, 203 is chosen such that the electronic component block can only be inserted in two contact points belonging to two different contact stations 103, wherein the distance between the two contact points is minimal under all distances between the contact points of the two different contact stations. This ensures that, in case only the two-dimensional plane of the assembly panel 102 is utilized to assemble an electronic circuit, each contact station 103 can be used to electrically connect a maximum of four electronic component blocks simultaneously, wherein in addition the voltage level of the contact station 103 can be measured at the center contact point 108 without disconnecting one of the connected electronic component blocks. If the electronic component blocks are stacked over each other thereby utilizing the third dimension, i.e. the space above the assembly panel 102 to assemble an electronic circuit on the breadboard 100, even more than four electronic component blocks can simultaneously be connected to a contact station 103. It is pointed out that there is no principal limit for the number of component blocks which may be connected to a contact station 103.

Fig.3a and Fig.3b show a top and a bottom perspective view of an electronic component block comprising a digital logical AND-gate as an example of an active electronic component block 300. The active electronic component block 300 comprises a block housing 301, an active electronic component element (not shown), which is received in the block housing 301 and connection pins 302, 303, 304, 305, 306, 307 which are received in the block housing 301. The connection pins 302, 305 are connected to the input terminals of the AND-gate received in the block housing 301. The connection pin 303 is connected to the output of the AND-gate. The connection pin 304 is not connected to any terminal of the AND-gate representing the active electronic component element and is just used to ensure a secure mechanical contact between the electronic component block and the breadboard 100. The connection pins 306 and 307 are connected to the +5 volt terminal and to the 0 volt terminal of the AND-gate. Therefore, when the active electronic component block is inserted properly, the +5 volt terminal and the 0 volt terminal of the AND-gate is connected to one of the first power supply points 110 and to one of the second power supply points 111, respectively.

The active electronic component block 300 further comprises a mounting strip 308 whereon the active electronic component element and the block housing 301 are mounted. The connection pins 302, 303, 304, 305, 306, 307 are also mounted to the mounting strip 308. On the block housing 301 there is printed a legend 309 indicating the type and the terminals of the active electronic element (AND-gate) included in the electronic component block 300. For teaching purposes, the 0 volt and the 5 volt terminals of the AND-gate are not indicated on the legend.

As described above, the distances between the connection pins 302, 303, 304, 305, 306, 307 are chosen such that the active electronic component block 300 can only be inserted correctly in the breadboard 100. Therefore, it is ensured that no electronic component block can be damaged because of a wrong connection with power supply points 110, 111. The appropriate choice of the distances between the connection pins 302, 303, 304, 305, 306, 307 ensures that, in case only the two-dimensional plane of the assembly panel 102 is utilized to assemble an electronic circuit, each contact station 103 can be used to electrically connect a maximum of four electronic component blocks simultaneously, wherein in addition the voltage level of the contact station can be measured at the center contact point 108 without disconnecting one of the connected electronic component blocks.

In the following, there will be introduced a few examples of active and passive electronic elements which can be received in electronic component blocks. It is pointed out that the following set only describes a few examples and that it is not intended to give an entire listing of electronic components which can be included in the electronic component block.

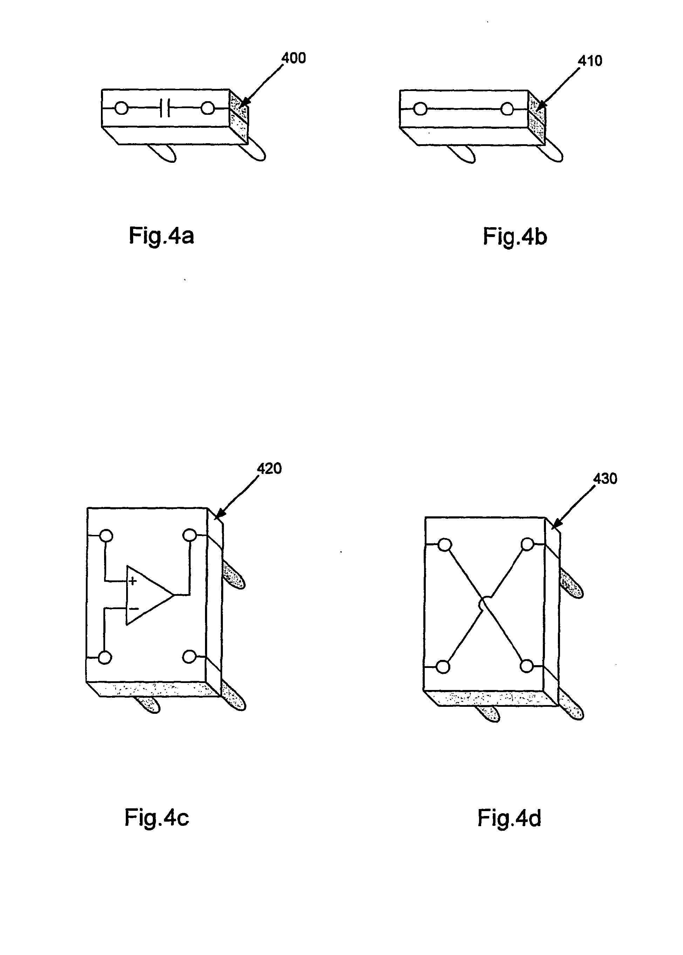

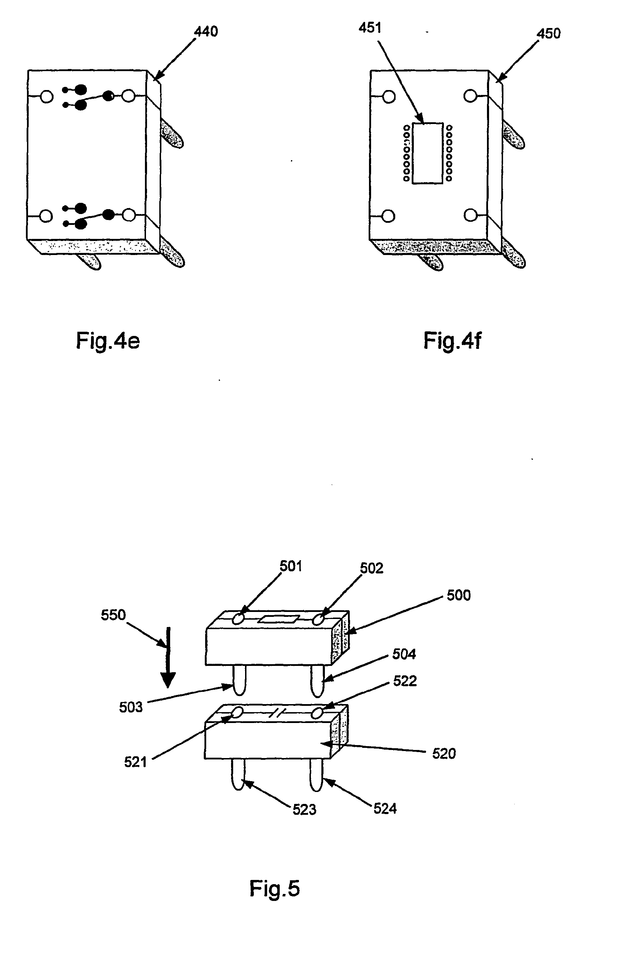

The figures 4a, 4b, 4c, 4d, 4e and 4f show all top perspective views of electronic component blocks comprising electronic elements according to the present invention. Fig. 4a shows a capacitor component block 400 comprising a capacitor, Fig.4b shows a wire component block 410 comprising a simple wire, Fig.4c shows an operational amplifier component block (active element) 420 comprising an operational amplifier, Fig.4d shows a cross link component block 430 comprising two simple wires, Fig.4e shows a passive electronic component block 440 comprising two independent mechanical switches and Fig.4f shows a socket 451 for receiving an integrated circuit, which socket 451 is attached in a passive electronic component block 450. Since the electronic component blocks 400, 410, 420, 430, 440, 450 shown in Fig.4a, Fig.4b, Fig.4c, Fig.4d, Fig.4e and Fig.4f are assembled in the same way as the electronic component blocks shown in Fig.2a, Fig.2b, Fig. 3a and Fig.3b, a detailed description thereof will be omitted.

At this point it is mentioned that also larger electronic component blocks can be used which comprise e.g. multiple-input and/or multiple-output component elements. In such a case it is often preferred that the larger electronic component blocks span across more than 2x2 contact stations in order to have enough space to receive also very large electronic component elements and/or terminals for connecting the large electronic component blocks with other external electronic devices.

Another way to cater for large electronic component elements is to provide specially built cables, wherein one end of the cable is a connection pin and the other end of the cable is a crocodile clip. To electrically connect such a large electronic component element with the breadboard 100 one end of the large electronic component element will be connected to the crocodile clip of a special cable whose connection pin is inserted into a contact station 103 of the breadboard. The other end of the large electronic component element will be connected to the crocodile clip of a second special cable whose connection pin is inserted into a second contact station 103 of the breadboard 100.

Fig.5 shows a top perspective view of two component blocks 500, 520 which are to be connected together leading to a parallel connection of the two electronic elements received in the two component blocks. The upper electronic component block 500 comprises a resistor while the lower electronic component block 520 comprises a capacitor.

Each of the two component blocks 500 and 520 comprise two holes 501, 502 and 521, 522 located on their upper side. The holes 501, 502, 521, 522 are formed in order to enable connection pins of other passive component blocks to be inserted such that the connection pins of other passive component blocks provide an electrical contact with the connection pins 503, 504, 523, 524. Thereby a parallel connection of the component blocks 500, 520 can be easily obtained when the component block 500 is moved with respect to the component block 520 in the direction indicated by the arrow 550.

The parallel connection of the two component blocks 500, 520 leads to a RC-component which is well known from basic analog electronics. Since the two electronic component blocks 500, 520 are assembled in the same way as the electronic component block shown in Fig.2a and Fig.2b a detailed description will be omitted in order not to repeat the same description.

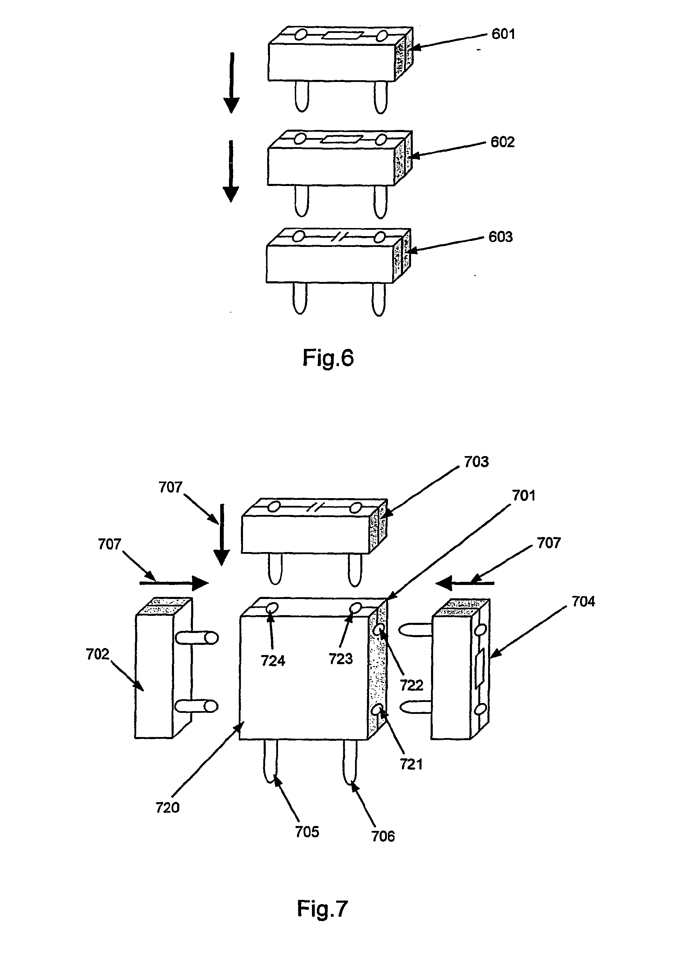

Fig.6 shows a top perspective view of three component blocks 601, 602, 603 which are to be connected together leading to a parallel connection of the three electronic elements received in the three component blocks. The upper and the middle electronic component blocks 601 and 602 each comprises a resistor while the lower electronic component block 603 comprises a capacitor. The parallel connection of the three component blocks 601, 602 and 603 again leads to a RC-component. For the sake of conciseness a detailed description of Fig.6 will be omitted.

Fig.7 shows a top perspective view of a serial connection of three component blocks 702, 703 and 704 employing a serial connection unit 701. The serial connection unit 701 comprises a block housing 720, two connection pins 705 and 706 and six insertion holes. Due to the perspective view only four insertion holes 721, 722, 723, 724 from the six insertion holes can be seen in Fig.7. The six insertion holes are located in pairs on three side surfaces of the serial connection unit 701. The six insertion holes are formed in order to enable connection pins of other passive component blocks to be inserted such that the connection pins of other three passive component blocks provide an electrical contact such that a serial connection of the other three passive component blocks can be achieved when the component blocks 702, 703 and 704 are moved with respect to the serial connection unit 701 in the direction indicated by the arrows 707. Therefore, if the three component blocks 702, 703 and 704 are assembled together as depicted by the arrows 707 the impedance between the two connection pins 705 and 706 corresponds to the series impedance of the three electronic component blocks 702, 703 and 704.

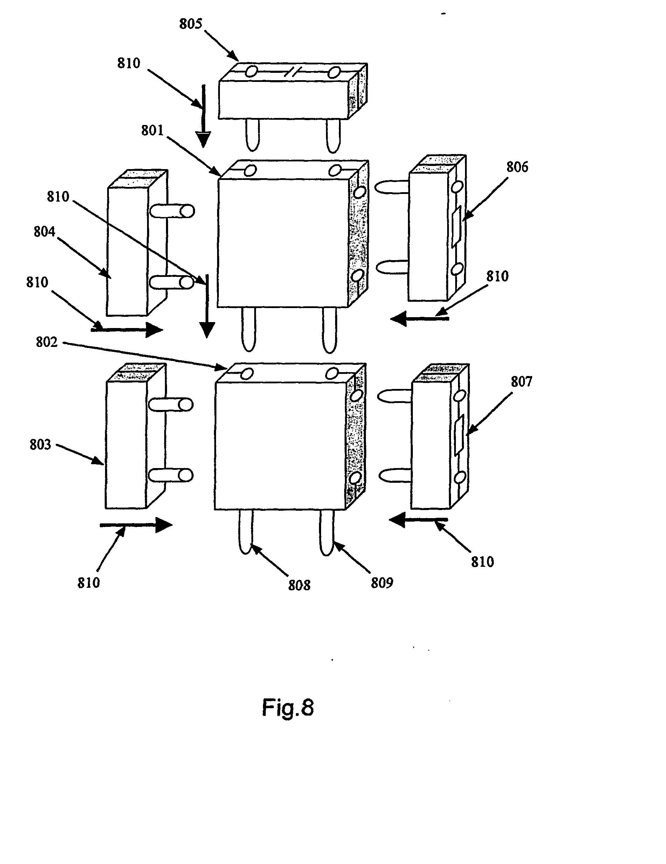

Fig.8 shows a top perspective view of a serial connection of five component blocks 803, 804, 805, 806 and 807 employing two serial connection units 801 and 802. If the five component blocks 803, 804, 805, 806 and 807 are assembled together as depicted by the arrows 810 the impedance between the two connection pins 808 and 809 corresponds to the series impedance of the five electronic component blocks 803, 804, 805, 806 and 807.

## Claims

1. Breadboard (100) for building and displaying electronic circuits assembled by electronic component blocks, used for educational purposes, comprising
- a panel housing (101),
- a rectangular assembly panel (102) attached to and covering the panel housing, and
- a plurality of contact stations (103) located on and periodically distributed over the assembly panel such that they form a rectangular grid, which contact stations are electrically isolated from each other and each contact station comprises a number of contact points (104, 105, 106, 107) which are electrically connected to each other and which are capable of receiving a connection pin of an electronic component block, wherein the number and the spatial arrangement of the contact points is the same for all contact stations, **characterized by**
- a plurality of first power supply points (110) located on and periodically distributed over the assembly panel such that they form a rectangular grid, which first power supply points are not visually electrically connected to each other, and
- a plurality of second power supply points (111) located on and periodically distributed over the assembly panel such that they form a rectangular grid, which second power supply points are not visually electrically connected to each other and the second power supply points (111) are electrically isolated from the first power supply points (110),
wherein the grids formed by the contact stations (103), the first power supply points (110) and the second power supply points have the same periodicity and are spatially shifted with respect to each other, and
each contact station (103) comprises five contact points (104, 105, 106, 107, 108), wherein one center contact point (108) is located in the center of the contact station and the four contact points (104, 105, 106, 107) surrounding the center contact point are symmetrically and equidistantly located around the center contact point, wherein three (105, 108, 107) of the contact points including the center contact point are located along one of the two directions defined by the rectangular grid of the contact stations and the sides of the assembly panel, and three (104, 108, 106) of the contact points including the center contact point are located along the other direction of the two directions defined by the rectangular grid of the contact stations and the sides of the assembly panel.

2. Breadboard according to claim 1, wherein the center contact point has a different shape than the surrounding contact points.

3. Breadboard according to claim 1, wherein the conductible connection between the five contact points (104, 105, 106, 107, 108) is visually indicated by lines (109) which are printed on the assembly panel (102).

4. Breadboard according to claim 1, which is arranged in such a way that it can be combined with a further breadboard of the same type forming an expanded breadboard such that the spatial periodicity of the of contact stations, the first power supply points and the second power supply points is conserved on the extended top surface of the expanded breadboard.

5. Breadboard according to claim 1, further comprising a linking connector which is located at a side face of the panel housing and electrically connected to the first power supply points and to the second power supply points.

6. Breadboard according to claim 5, wherein the linking connector is connectable to a power supply source.

7. Breadboard according to claim 4 and 5, wherein the linking connector is capable of mechanically connecting the breadboard with the further breadboard and/or with a power supply source.

8. Breadboard according to claim 4 and 5, wherein the linking connector is capable of electrically connecting the first and the second power supply points of the breadboard with the first and the second power supply points of the further breadboard, respectively.

9. Breadboard according to claim 4 and 5, comprising one linking connector or more linking connectors at each side face of the panel housing.

10. Breadboard according to claim 9, wherein the linking connectors are located at predefined positions such that an improper connection of the breadboard with the further breadboard or with a power supply source is either impossible or visually obviously wrong.

11. Breadboard according to claim 1, wherein the assembly panel and/or the panel housing are made out of an electrically isolating material.

12. Breadboard according to claim 1, wherein the assembly panel and/or the panel housing are made out of synthetic resin.

13. Breadboard according to claim 1, wherein the assembly panel is a printed circuit board.

14. Kit for building and displaying electronic circuits, used for educational purposes, including a breadboard (100) and electronic component blocks (200, 300) comprising
- a block housing (201, 301),
- a component element which is received in the block housing and
- connection pins (202, 203; 302-307), which are received in the block housing and which are electrically connected to terminals of the component element **characterized by** a breadboard (100) according to one of claims 1 to 13.

15. Kit according to claim 14, wherein the electronic component block further comprises a legend located on the block housing for denoting the characteristics of the component element.

16. Kit according to claim 14, wherein
- the block housing comprises holes to allow the insertion of connection pins of a further electronic component block such that the further electronic component block can mechanically be connected to the electronic component block, and
- the connection pins are formed such that, when the further electronic component block is mechanically connected to the electronic component block, the connection pins of the further electronic component block are electrically connected to the connection pins.

17. Kit according to claim 16, further comprising a serial connection unit (701) which, when connected between contact stations of the assembly panel and further electronic component blocks, provides a serial electrical circuit of the further electronic component blocks.

18. Kit according to claim 14 wherein the electronic component block further comprises
- a first power supply connection pin which is received in the block housing and which is electrically connected to a terminal of the component element and
- a second power supply connection pin which is received in the block housing and which is electrically connected to another terminal of the component element,
wherein, when the electronic component block is attached to the assembly panel, the first power supply connection pin is electrically connected to one of the first power supply points and the second power supply connection pin is electrically connected to one of the second power supply points.

19. Kit according to claim 14 wherein the component element comprises a conductive wire, a crocodile clip, a resistor, a light bulb, a capacitor, an inductor, a diode, a transistor, a digital logic gate, an integrated circuit, a housing for an integrated circuit and/or a circuit comprising several electrical and/or electronic components.

## Patentansprüche

1. Schaltbrett (100) zum Aufbauen und Anzeigen elektronischer Schaltkreise, die aus elektronischen Komponentenblöcken zusammengesetzt sind, das für Ausbildungszwecke verwendet wird, aufweisend:
- ein Paneelgehäuse (101),
- ein rechteckiges Montagepaneel (102), das an dem Paneelgehäuse angebracht ist und dieses abdeckt,
- eine Mehrzahl von Kontaktstellen (103), die auf dem Montagepaneel angeordnet sind und periodisch auf diesem verteilt sind, so dass sie ein rechteckiges Raster bilden, wobei die Kontaktstellen voneinander elektrisch isoliert sind und jede Kontaktstelle eine Anzahl von Kontaktpunkten (104, 105, 106, 107) aufweist, die elektrisch miteinander verbunden sind und die im Stande sind, einen Verbindungsstift eines elektrischen Komponentenblocks aufzunehmen, wobei die Anzahl und die räumliche Anordnung der Kontaktpunkte für alle Kontaktstellen die gleiche ist,
**gekennzeichnet durch**
- eine Mehrzahl von ersten Energieversorgungspunkten (110), die auf dem Montagepaneel angeordnet ist und über diese periodisch verteilt ist, so dass sie ein rechteckiges Raster ausbilden, wobei die ersten Energieversorgungspunkte nicht sichtbar elektrisch miteinander verbunden sind, und
- eine Mehrzahl von zweiten Energieversorgungspunkten (111), die auf dem Montagepaneel angeordnet ist und über dieses periodisch verteilt ist, so dass sie ein rechteckiges Raster ausbilden, wobei die zweiten Energieversorgungspunkte nicht sichtbar elektrisch miteinander verbunden sind und die zweiten Energieversorgungspunkte (111) von den ersten Energieversorgungspunkten (110) elektrisch isoliert sind,
wobei die Raster, die von den Kontaktstellen (103), den ersten Energieversorgungspunkten (110) und den zweiten Energieversorgungspunkten ausgebildet sind, die gleiche Periodizität aufweisen und räumlich zueinander versetzt sind und
jede Kontaktstelle (103) fünf Kontaktpunkte (104, 105, 106, 107, 108) aufweist, wobei ein mittlerer Kontaktpunkt (108) in der Mitte der Kontaktstelle angeordnet ist und die vier Kontaktpunkte (104, 105, 106, 107), die den mittleren Kontaktpunkt umgeben, symmetrisch und äquidistant um den mittleren Kontaktpunkt angeordnet sind, wobei drei (105, 108, 107) der Kontaktpunkte einschließlich des mittleren Kontaktpunkts entlang einer der zwei Richtungen angeordnet sind, die **durch** das rechteckige Raster der Kontaktstellen und die Seiten des Montagepaneels definiert sind, und drei (104, 108, 106) der Kontaktpunkte einschließlich des mittleren Kontaktpunkts entlang der anderen Richtung der zwei Richtungen angeordnet sind, die **durch** das rechteckige Raster der Kontaktstellen und die Seiten des Montagepaneels definiert sind.

2. Schaltbrett gemäß Anspruch 1, wobei der mittlere Kontaktpunkt eine andere Form als die umgebenden Kontaktpunkte aufweist.

3. Schaltbrett gemäß Anspruch 1, wobei die leitfähige Verbindung zwischen den fünf Kontaktpunkten (104, 105, 106, 107, 108) mittels auf das Montagepaneel (102) gedruckter Linien (109) sichtbar angezeigt wird.

4. Schaltbrett gemäß Anspruch 1, welches derart ausgestaltet ist, dass es unter Ausbilden eines erweiterten Schaltbretts mit einem weiteren Schaltbrett des gleichen Typs kombiniert werden kann, so dass die räumliche Periodizität der Kontaktstellen, der ersten Energieversorgungspunkte und der zweiten Energieversorgungspunkte auf der erweiterten oberen Fläche des erweiterten Schaltbrettes beibehalten wird.

5. Schaltbrett gemäß Anspruch 1, ferner aufweisend ein Verbindungsteil, das an einer Seitenfläche des Paneelgehäuses angeordnet ist und mit den ersten Energieversorgungspunkten und den zweiten Energieversorgungspunkten elektrisch verbunden ist.

6. Schaltbrett gemäß Anspruch 5, wobei das Verbindungsteil an eine Energieversorgungsquelle anschließbar ist.

7. Schaltbrett gemäß Anspruch 4 und 5, wobei das Verbindungsteil im Stande ist, das Schaltbrett mit dem weiteren Schaltbrett und/oder mit einer Energieversorgungsquelle mechanisch zu verbinden.

8. Schaltbrett gemäß Anspruch 4 und 5, wobei das Verbindungsteil im Stande ist, die ersten und die zweiten Energieversorgungspunkte des Schaltbrettes mit den ersten bzw. den zweiten Energieversorgungspunkten des weiteren Schaltbrettes elektrisch zu verbinden.

9. Schaltbrett gemäß Anspruch 4 und 5, das ein Verbindungsteil oder mehrere Verbindungsteile an jeder Seitenfläche des Paneelgehäuses aufweist.

10. Schaltbrett gemäß Anspruch 9, wobei die Verbindungsteile an vorbestimmten Positionen angeordnet sind, so dass eine unsachgemäße Verbindung des Schaltbrettes mit dem weiteren Schaltbrett oder mit einer Energieversorgungsquelle entweder unmöglich oder sichtbar offensichtlich falsch ist.

11. Schaltbrett gemäß Anspruch 1, wobei das Montagepaneel und/oder das Paneelgehäuse aus einem elektrisch isolierenden Material hergestellt sind.

12. Schaltbrett gemäß Anspruch 1, wobei das Montagepaneel und/oder das Paneelgehäuse aus einem Kunstharz hergestellt sind.

13. Schaltbrett gemäß Anspruch 1, wobei das Montagepaneel eine gedruckte Leiterplatte ist.

14. Bausatz zum Aufbauen und Anzeigen elektronischer Schaltkreise, welche für Ausbildungszwecke verwendet werden, aufweisend ein Schaltbrett (100) und elektronische Komponentenblöcke (200, 300), die aufweisen
- ein Blockgehäuse (201, 301),
- ein Komponentenelement, das in dem Blockgehäuse aufgenommen ist, und
- Verbindungsstifte (202, 203; 302-307), die in dem Blockgehäuse aufgenommen sind und die an die Anschlüsse der Komponentenelemente eletrisch angeschlossen sind,
**gekennzeichnet durch** ein Schaltbrett (100) gemäß einem der Ansprüche 1 bis 13.

15. Bausatz gemäß Anspruch 14, wobei der elektronische Komponentenblock ferner eine Legende aufweist, die auf dem Blockgehäuse zum Anzeigen der Eigenschaften des Komponentenelements angeordnet ist.

16. Bausatz gemäß Anspruch 14, wobei
- das Blockgehäuse Öffnungen aufweist, um die Einbringung von Verbindungsstiften eines weiteren elektronischen Komponentenblocks zu ermöglichen, so dass der weitere elektronische Komponentenblock mit dem elektronischen Komponentenblock mechanisch verbunden werden kann, und
- die Verbindungsstifte ausgebildet sind, so dass, wenn der weitere elektronische Komponentenblock mit dem elektronischen Komponentenblock mechanisch verbunden ist, die Verbindungsstifte des weiteren elektronischen Komponentenblocks mit den Verbindungsstiften elektrisch verbunden sind.

17. Bausatz gemäß Anspruch 16, ferner aufweisend eine serielle Verbindungseinheit (701), welche, wenn zwischen Kontaktstellen des Montagepaneels und weitere elektronische Komponentenblöcke geschaltet, einen seriellen elektrischen Schaltkreis der weiteren elektronischen Komponentenblöcke bereitstellt.

18. Bausatz gemäß Anspruch 14, wobei der elektronische Komponentenblock ferner aufweist
- einen ersten Energieversorgungsverbindungsstift, der in dem Blockgehäuse aufgenommen ist und der mit einem Anschluss des Komponentenelements elektrisch verbunden ist, und
- einen zweiten Energieversorgungsverbindungsstift, der in dem Blockgehäuse aufgenommen ist und der mit einem anderen Anschluss des Komponentenelements elektrisch verbunden ist,
wobei, wenn der elektronische Komponentenblock an dem Montagepaneel angebracht ist, der erste Energieversorgungsverbindungsstift mit einem der ersten Energieversorgungspunkte und der zweite Energieversorgungsverbindungsstift mit einem der zweiten Energieversorgungspunkte elektrisch verbunden ist.

19. Bausatz gemäß Anspruch 14, wobei das Komponentenelement ein leitendes Kabel, eine Krokodilklemme, einen Widerstand, eine Glühbirne, einen Kondensator, einen Induktor, eine Diode, einen Transistor, ein digitales Logik-Gatter, einen integrierten Schaltkreis, ein Gehäuse für einen integrierten Schaltkreis und/oder einen Schaltkreis aufweist, der mehrere elektrische und/oder elektronische Komponenten aufweist.

## Revendications

1. Table de montage (100) pour construire et afficher des circuits électroniques montés par des blocs de composants électroniques, utilisée à des fins éducatives, comprenant :
- un boîtier de panneau (101),
- un panneau de montage rectangulaire (102) relié au et recouvrant le boîtier de panneau, et
- une pluralité de postes de contact (103) situés sur et périodiquement répartis sur le panneau de montage de sorte qu'ils forment une grille rectangulaire, lesquels postes de contact sont électriquement isolés les uns des autres et chaque poste de contact comprend un certain nombre de points de contact (104, 105, 106, 107) qui sont électriquement reliés les uns aux autres et qui peuvent recevoir une broche de connexion d'un bloc de composant électronique, dans laquelle le nombre des points de contact et l'agencement spatial pour ceux-ci est identique pour tous les postes de contact,
**caractérisée en ce que**
- une pluralité de premier points d'alimentation électrique (110) est située sur et périodiquement répartie sur le panneau de montage de sorte qu'elle forme une grille rectangulaire, lesquels premier points d'alimentation électrique ne sont pas visuellement électriquement reliés les uns aux autres, et
- une pluralité de second points d'alimentation électrique (111) est située sur et périodiquement répartie sur le panneau de montage de sorte qu'elle forme une grille rectangulaire, lesquels seconds points d'alimentation électrique ne sont pas visuellement électriquement reliés les uns aux autres, et les seconds points d'alimentation électrique (111) sont électriquement isolés des premier points d'alimentation électrique (110),
dans laquelle les grilles formées par les postes de contact (103), les premier points d'alimentation électrique (110) et les second points d'alimentation électrique ont la même périodicité et sont décalées dans l'espace les unes par rapport aux autres, et
chaque poste de contact (103) comprend cinq points de contact (104, 105, 106, 107, 108), où un point de contact central (108) est situé au centre du poste de contact et les quatre points de contact (104, 105, 106, 107) entourant le point de contact central sont situés de manière équidistante et symétrique autour du point de contact central, où trois points (105, 108, 107) des points de contact comprenant le point de contact central sont situés le long d'une des deux directions définies par la grille rectangulaire des postes de contact et les côtés du panneau de montage, et trois points (104, 108, 106) des points de contact comprenant le point de contact central sont situés le long de l'autre direction des deux directions définies par la grille rectangulaire des postes de contact et les côtés du panneau de montage.

2. Table de montage selon la revendication 1, dans laquelle le point de contact central a une forme différente de celle des points de contact qui l'entourent.

3. Table de montage selon la revendication 1, dans laquelle la connexion conductrice entre les cinq points de contact (104, 105, 106, 107, 108) est visuellement indiquée par des lignes (109) qui sont imprimées sur le panneau de montage (102).

4. Table de montage selon la revendication 1, qui est agencée de façon à pouvoir être combinée avec une autre table de montage du même type formant une table de montage agrandie, de sorte que la périodicité spatiale des postes de contact, des premier points d'alimentation électrique et des seconds points d'alimentation électrique soit conservée sur la surface supérieure étendue de la table de montage agrandie.

5. Table de montage selon la revendication 1, comprenant en outre un connecteur de liaison qui est situé au niveau d'une face latérale du boîtier de panneau et qui est électriquement relié aux premiers points d'alimentation électrique et aux seconds points d'alimentation électrique.

6. Table de montage selon la revendication 5, dans laquelle le connecteur de liaison peut être connecté à une source d'alimentation électrique.

7. Table de montage selon la revendication 4 et 5, dans laquelle le connecteur de liaison peut relier mécaniquement la table de montage à la table de montage supplémentaire et/ou à une source d'alimentation électrique.

8. Table de montage selon la revendication 4 et 5, dans laquelle le connecteur de liaison peut relier électriquement les premiers et les seconds points d'alimentation électrique de la table de montage aux premiers et seconds points d'alimentation électrique de la table de montage supplémentaire, respectivement.

9. Table de montage selon la revendication 4 et 5, comprenant un connecteur de liaison ou plusieurs connecteurs de liaison au niveau de chaque face latérale du boîtier de panneau.

10. Table de montage selon la revendication 9, dans laquelle les connecteurs de liaison sont situés à des positions prédéfinies de sorte qu'une connexion inappropriée de la table de montage à l'autre table de montage ou à une source d'alimentation électrique soit impossible ou visuellement évidemment fausse.

11. Table de montage selon la revendication 1, dans laquelle le panneau de montage et/ou le boîtier de panneau sont réalisés à partir d'un matériau isolant l'électricité.

12. Table de montage selon la revendication 1, dans laquelle le panneau de montage et/ou le boîtier de panneau sont réalisés à partir d'une résine synthétique.

13. Table de montage selon la revendication 1, dans laquelle le panneau de montage est une carte à circuit imprimé.

14. Kit pour construire et afficher des circuits électroniques, utilisé à des fins éducatives, comprenant une table de montage (100) et des blocs de composants électroniques (200, 300) comprenant
- un boîtier de blocs (201, 301),
- un élément composant qui est reçu dans le boîtier de blocs, et
- des broches de connexion (202, 203 ; 302 à 307) qui sont reçues dans le boîtier de blocs et qui sont électriquement reliées aux bornes de l'élément composant, **caractérisé par** une table de montage (100), selon l'une quelconque des revendications 1 à 13.

15. Kit selon la revendication 14, dans lequel le bloc de composant électronique comprend en outre une légende située sur le boîtier de blocs pour indiquer les caractéristiques de l'élément composant.

16. Kit selon la revendication 14, dans lequel
- le boîtier de blocs comprend des orifices pour permettre l'insertion de broches de connexion d'un bloc de composant électronique supplémentaire de sorte que le bloc de composant électronique supplémentaire puisse être mécaniquement relié au bloc de composant électronique, et
- les broches de connexion sont formées de sorte que, quand le bloc de composant électronique supplémentaire est mécaniquement relié au bloc de composant électronique, les broches de connexion du bloc de composant électronique supplémentaire sont électriquement reliées aux broches de connexion.

17. Kit selon la revendication 16, comprenant en outre une unité de connexion en série (701) qui fournit, quand elle est reliée entre des postes de contact du panneau de montage et à d'autres blocs de composants électroniques, un circuit électrique en série des blocs de composants électroniques supplémentaires.

18. Kit selon la revendication 14, dans laquelle le bloc de composant électronique comprend en outre
- une première broche de connexion d'alimentation électrique qui est reçue dans le boîtier de panneau et qui est électriquement reliée à une borne de l'élément composant, et
- une seconde broche de connexion d'alimentation électrique qui est reçue dans le boîtier de panneau et qui est électriquement reliée à une autre borne de l'élément composant,
dans lequel, quand le bloc de composant électronique est attaché au panneau de montage, la première broche de connexion d'alimentation électrique reliée à un des premiers points d'alimentation électrique et la seconde broche de connexion d'alimentation électrique est électriquement reliée à un des seconds points d'alimentation électrique.

19. Kit selon la revendication 14, dans lequel l'élément composant comprend un câble conducteur, une pince de type crocodile, une résistance, une lampe, un condensateur, une bobine d'induction, une diode, un transistor, une porte logique numérique, un circuit intégré, un boîtier pour un circuit intégré et/ou un circuit comprenant plusieurs composants électriques et/ou électroniques.
